# EUROPEAN PATENT APPLICATION

(11) **EP 3 042 752 A1**
(43) Date of publication of application: **13.07.2016**
(21) Application number: 16150598.7
(22) Date of filing: 08.01.2016
(51) Int. Cl.: B29C 67/00

(54) **METHOD FOR FORMING RESIN BODIES AND FORMED ARTICLE**

(30) Priority: 09.01.2015 JP 2015003336
(71) Applicant: Sanyu Rec Co., Ltd., Osaka 5698558 (JP)
(72) Inventor: OKI, Jun, Osaka 5698558 (JP)
(74) Representative: Held, Stephan

(57) **Abstract**

The present invention provides a method for forming resin bodies at a reduced production cost. The method for forming resin bodies according to the present invention comprises dispensing a liquid resin L from a dispenser 3 at multiple positions on a substrate 10 to form resin bodies R, the dispensing operation of the dispenser 3 being adjustable depending on the positions.

## Description

### Technical Field

The present invention relates to a method for forming resin bodies on an object, and the formed product.

### Background Art

Examples of products having multiple resin bodies on the surface thereof include a mat with protrusions for stimulating the sole of a foot (Patent Literature 1). A currently used method for producing such a product comprises pouring a liquid resin into a mold with cavities, and press-molding the resin.

### Citation List

### Patent Literature

Patent Literature 1: JP2001-258988A

### Summary of Invention

### Technical Problem

However, molds and equipment for pouring a liquid resin into a mold and press-molding the resin are generally expensive. Moreover, design changes, for example, enlargement of a part of resin bodies (e.g., resin bodies corresponding to the arch of a foot) increases the necessary cost because of the need of another mold for the design change.

The present invention was completed to solve the above problem, and an object of the invention is to provide a method for forming resin bodies at a reduced production cost.

### Solution to Problem

The method for forming resin bodies according to the present invention was completed to solve the problem. The method comprises dispensing a liquid resin from a dispenser at multiple positions on an object, wherein the dispensing operation of the dispenser is adjustable depending on the positions.

In the method for forming resin bodies, the amount of the liquid resin to be dispensed is preferably adjustable depending on the positions.

In the method for forming resin bodies, the time period during which the liquid resin is dispensed is preferably adjustable depending on the positions.

In the method for forming resin bodies, the relative velocity in the vertical direction of the dispenser with respect to the object while the liquid resin is dispensed is preferably adjustable depending on the positions.

In the method for forming resin bodies, the distance between the object and the dispenser in the vertical direction at the time point at which the liquid resin starts to be dispensed is preferably adjustable depending on the positions.

In the method for forming resin bodies, the liquid resin at 23°C preferably has a viscosity of 100 to 300 Pa·s.

In the method for forming resin bodies, the liquid resin preferably has a thixotropy of 5.0 to 7.0.

An article according to the present invention is formed by the method for forming resin bodies according to the present invention.

### Advantageous Effects of Invention

The present invention can provide a method for forming resin bodies at a reduced production cost.

### Brief Description of Drawings

Fig. 1 illustrates the exterior of a resin-body-forming apparatus according to one embodiment of the present invention.
Fig. 2 is a block diagram illustrating the function of the resin-body-forming apparatus of Fig. 1.
Fig. 3 is a perspective view of a substrate on which resin bodies have not yet been formed.
Fig. 4 illustrates the details of setting data.
Fig. 5 is a perspective view of a substrate on which resin bodies have been formed.

### Description of Embodiments

The following describes one embodiment of the present invention with reference to the attached drawings. However, the present invention is not limited to the following embodiment.

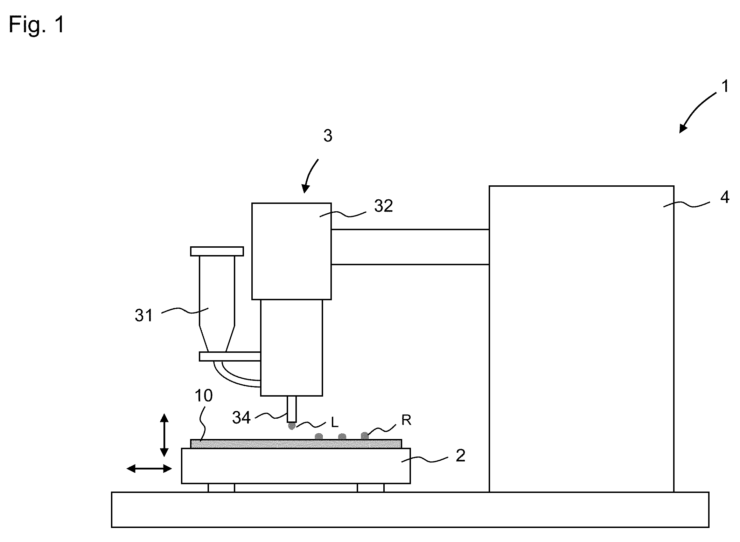

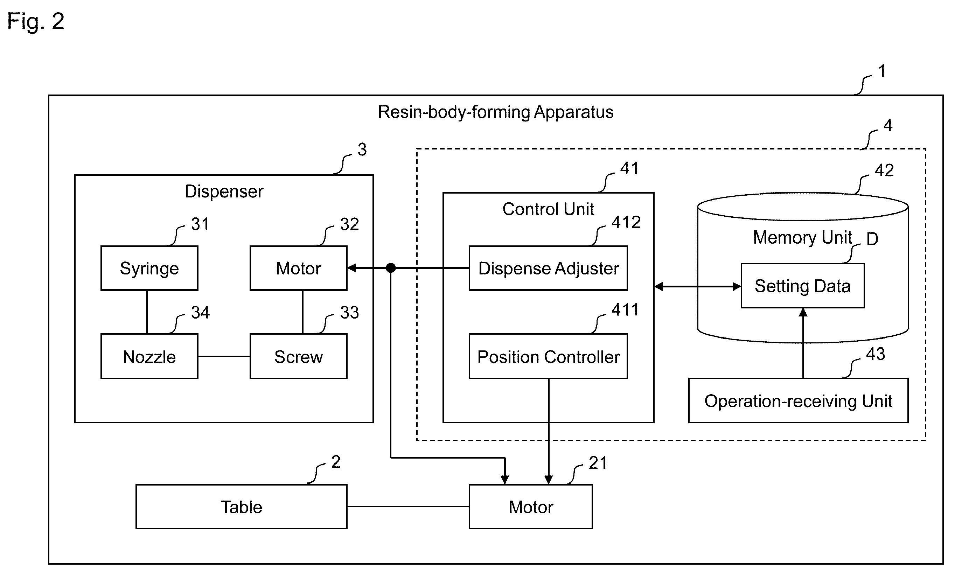

Fig. 1 illustrates the exterior of a resin-body-forming apparatus 1 according to one embodiment of the present invention. Fig. 2 is a block diagram illustrating the function of the resin-body-forming apparatus 1. The resin-body-forming apparatus 1 is an example of an apparatus for practicing the method for forming resin bodies according to the present invention.

As illustrated in Fig. 1, the resin-body-forming apparatus 1 is provided with a table 2, a dispenser 3, and a main unit 4. A substrate 10, which is the object on which resin bodies R (formed article) are formed, is to be placed on the table 2. The table 2 is connected to a motor 21 shown in Fig. 2 via a drive transmission mechanism, and is movable in the horizontal direction (XY direction) and in the vertical direction (Z direction) by the power of the motor 21. For example, the motor 21 is configured to cause one of three threaded rods, extending individually in direction X, Y, or Z, to rotate, and the table 2 moves in the direction of the rotating rod.

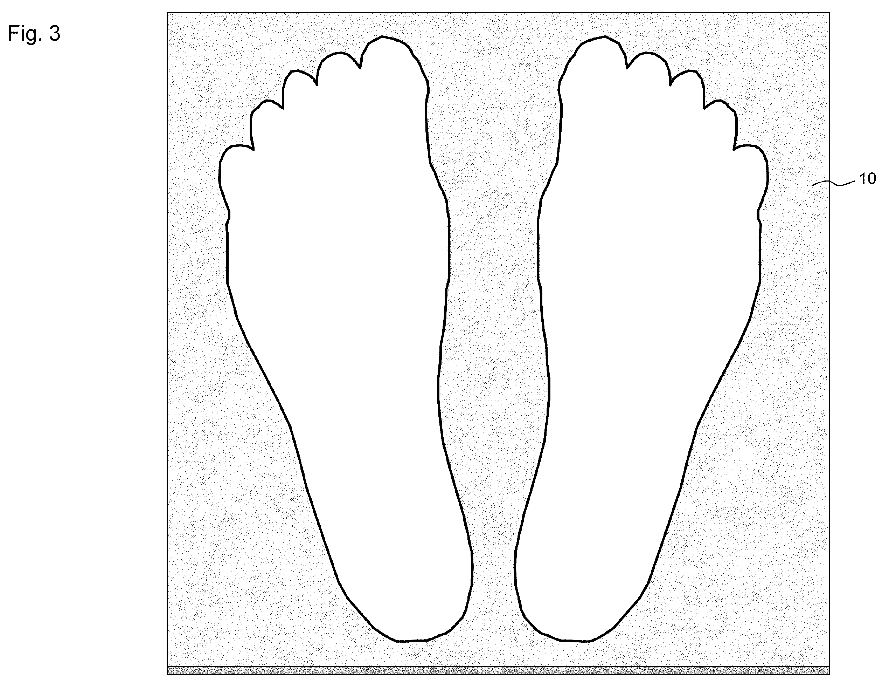

Fig. 3 is a perspective view of the substrate 10 on which resin bodies have not yet been formed. The substrate 10 is a flat plate made of a material, such as synthetic resin, wood, or metals, and is, for example, 250 mm in height, 250 mm in length, and 20 mm in thickness. The substrate 10 has a surface on which a feet-shaped frame is printed.

As shown in Fig. 1, the dispenser 3 is a device configured to dispense a liquid resin L at multiple positions on the substrate 10 to thereby form resin bodies R, and is held above the table 2. The dispenser 3 in this embodiment is a screw dispenser provided with a syringe 31, a motor 32, a screw 33 (not shown in Fig. 1), and a nozzle 34. The syringe 31 is for storage of the liquid resin L. The screw 33 is built in a housing of the dispenser 3. The motor 32, when activated, drives the screw 33 to thereby dispense the liquid resin L from the tip of the nozzle 34. The resin bodies R formed on the substrate 10 remain in a liquid state until the below-described cure treatment is performed. In this specification, however, the resin that has not been dripped onto the substrate 10 is referred to as "liquid resin," and the resin that has been dripped onto the substrate 10 is referred to as "resin body."

The dispenser 3 may be a jet dispenser configured to dispense from the nozzle 34 by downward stroke of a piston, the liquid resin L compressed in and delivered from the syringe 31; or the dispenser 3 may be a volume-metering dispenser capable of dispensing a fixed amount of the liquid resin L.

The main unit 4 includes a built-in controller provided with a CPU and a memory. Fig. 2 illustrates the functions of the controller as functional blocks of a control unit 41, a memory unit 42, and an operation-receiving unit 43. In particular, the control unit 41 may be configured with hardware, such as logic circuits, or may be configured with software by installing a control program in the controller.

The control unit 41 is a functional block configured to control the movement of the table 2, the movement of the dispenser 3, and the dispensing operation of the dispenser 3. To enable these functions, the control unit 41 includes a position controller 411 and a dispense adjuster 412.

The position controller 411 is a functional block configured to determine the position at which the liquid resin L is to be dispensed. Specifically, the position controller 411 drives the motor 21 to control the movement of the table 2 in the horizontal direction. This enables the tip of the nozzle 34 to face a desired position on the substrate 10 disposed on the table 2 to thereby determine the position at which the liquid resin L is to be dispensed. Instead of the table 2 being configured to move in the horizontal direction, the dispenser 3 may be configured to move in the horizontal direction.

The dispense adjuster 412 is a functional block configured to adjust the dispensing operation of the dispenser 3. Specifically, the dispense adjuster 412 controls the driving of the motor 21 and the motor 32 to adjust the amount of the liquid resin L dispensed from the nozzle 34, the time period during which the liquid resin L is dispensed, and the relative velocity in the vertical direction of the dispenser 3 with respect to the table 2, while the liquid resin L is dispensed. Instead of the table 2 being configured to move in the vertical direction, the dispenser 3 may be configured to move in the vertical direction.

The memory unit 42 is in the form of a hard disk drive, or a non-volatile memory, and stores a wide variety of data necessary for operation of the resin-body-forming apparatus 1. In this embodiment, setting data D is stored as such data in the memory unit 42. The setting data D includes information such as the position at which the liquid resin L is to be dispensed, and the amount of the liquid resin L to be dispensed. The position controller 411 and the dispense adjuster 412 in the control unit 41 refer to the setting data D to control the motor 21 and the motor 32.

The operation-receiving unit 43 is a functional block configured to receive the operation of the user through an operation panel or the like (not shown in the figures) provided in the main unit 4 to create or update the setting data D on the basis of the details of the received operation. The setting data D may be created beforehand in a separate computer and the like, and transmitted to the resin-body-forming apparatus 1 via a recording medium, wire communication, or wireless communication.

Table 1 shows an example of the setting data D.

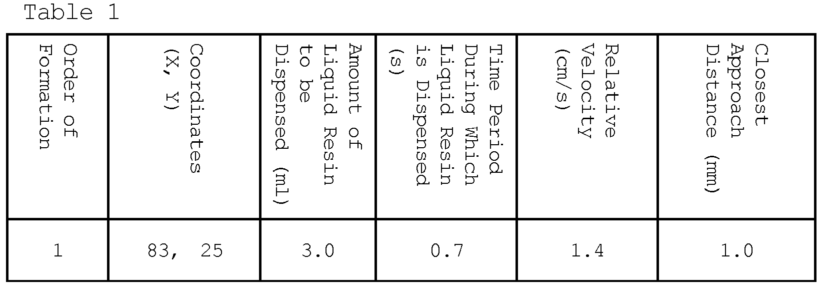

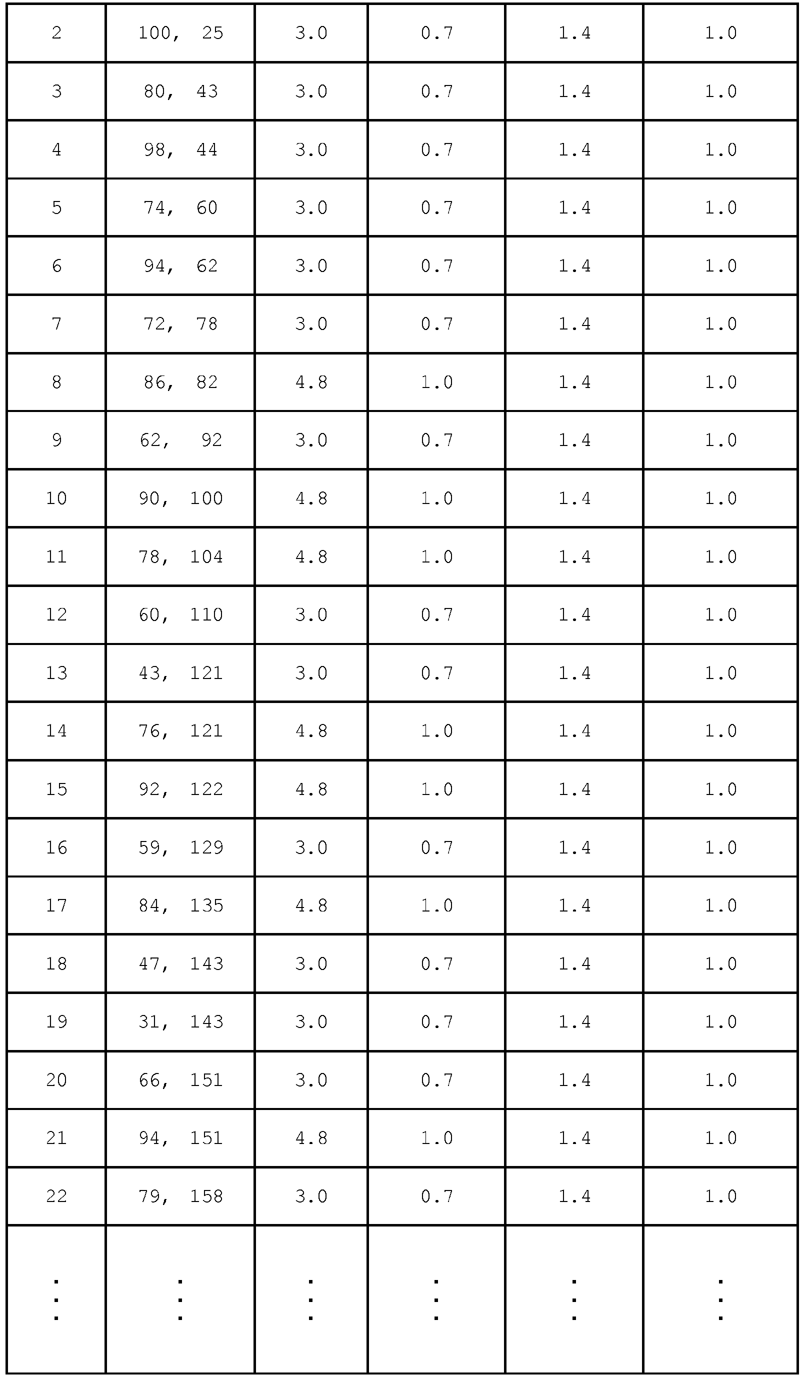

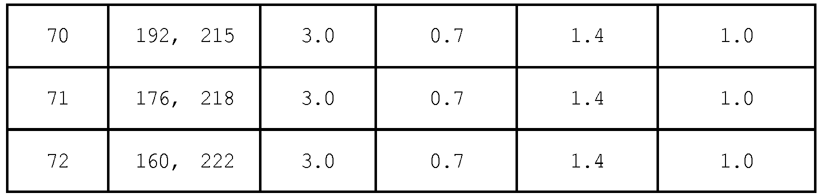

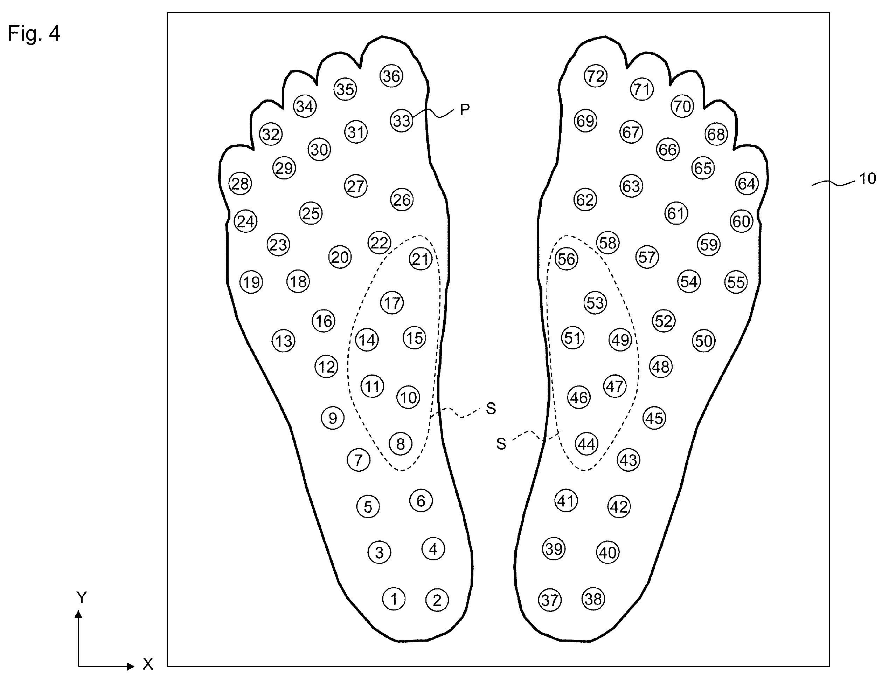

Fig. 4 shows the details of the setting data D. The 72 circles shown in Fig. 4 indicate positions P determined by the setting data D, and the liquid resin L is to be dispensed at the positions P. The number in the circles indicates the order in which the resin body is formed.

As shown in Table 1, the setting data D includes the coordinates, the amount of the liquid resin L to be dispensed, the time period during which the liquid resin L is to be dispensed, the velocity of the nozzle 34, and the closest approach distance from the nozzle 34 to the substrate 10. All of these parameters are determined for each position P.

Regarding the coordinates, coordinate x indicates the distance (mm) from the left side of the substrate 10, and coordinate y indicates the distance (mm) from the bottom side of the substrate 10.

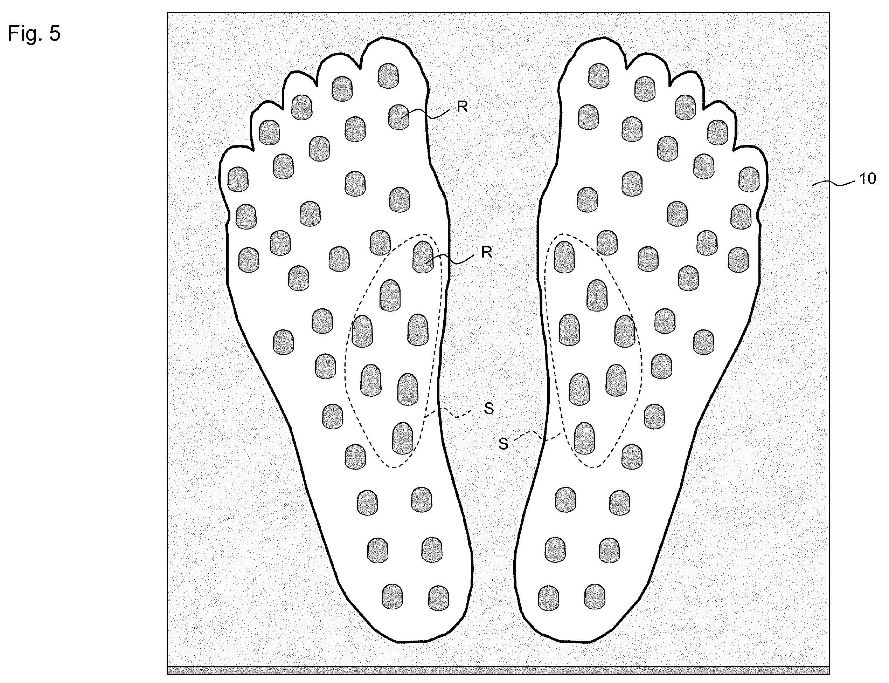

Regarding the amount of the liquid resin L, the liquid resin L is dispensed in an amount of 4.8 ml at each position P within the region surrounded with a dashed line corresponding to the arch of a foot shown in Fig. 5 ("special region S"), and the liquid resin L is dispensed in an amount of 3.0 ml at each position P outside the special region S. Regarding the time period during which the liquid resin is dispensed, the time period is set to 1.0 s for each position P within the special region S, and 0.7 s for each position P outside the special region S. Thus, the resin bodies R formed within the special region S become larger than resin bodies R formed outside the special region S.

The relative velocity refers to the relative velocity in the vertical direction of the dispenser 3 with respect to the table 2 while the liquid resin L is dispensed. The closest approach distance refers to the distance between the nozzle 34 and the substrate 10 at the time point at which the liquid resin L starts to be dispensed. Specifically, the distance between the table 2 and the dispenser 3 in the vertical direction at the time point at which the liquid resin L starts to be dispensed is adjustable depending on the position P in the resin-body-forming apparatus 1.

In this embodiment, the same relative velocity and the same closest approach distance are set for all of the positions P. However, a different relative velocity and a different closest approach distance may be set, depending on the position P. For example, setting a higher relative velocity leads to the formation of a more spindly shaped resin body R.

The position controller 411 and the dispense adjuster 412 in the control unit 41 shown in Fig. 2 control the motor 21 and the motor 32 in accordance with the aforementioned setting data D. Because the setting data D is rewritable, the dispense adjuster 412 can adjust, depending on the position P, at least one of the amount of the liquid resin L to be dispensed, the time period during which the liquid resin L is to be dispensed, the relative velocity in the vertical direction of the dispenser 3 with respect to the table 2 while the liquid resin L is dispensed, and the distance between the table 2 and the dispenser 3 in the vertical direction at the time point at which the liquid resin L starts to be dispensed. Thus, at least one of the size and the shape of the resin body R is variable depending on the position P on the substrate 10.

After a resin body R is formed at each of the 72 positions P on the substrate 10, the substrate 10 is removed from the table 2. Fig. 5 is a perspective view illustrating the substrate 10 on which the resin bodies R have been formed. As shown in Fig. 5, the resin bodies R formed within the special region S are larger (higher) than the resin bodies R formed outside the special region S.

The substrate 10 removed from the table 2 is then conveyed to a curing apparatus (not shown in figures). In the curing apparatus, the substrate 10 is subjected to a cure treatment, such as heating, to thereby cure the resin bodies R. When the resin bodies R are UV-curable resin, UV irradiation is used to cure the resin bodies R. This completes a foot-sole stimulation board that fits the shape of the sole of a foot.

As described above, the foot-sole stimulation board in this embodiment is designed such that the resin bodies R in the region corresponding to the arch of a foot are larger than the resin bodies R in other regions. To set the size of the resin bodies R more precisely so as to fit the shape of the sole of a foot or the positions of pressure points, at least one of the size and the shape of a resin body R can, merely by rewriting the details of the setting data D, be newly set depending on the position P on the substrate 10. Thus, a new mold is not required, unlike in the prior art. The foot-sole stimulation board in this embodiment fits a foot size of about 23 cm. However, a foot-sole stimulation board that fits a foot of a different size can also be produced merely by rewriting the details of the setting data D and using a substrate 10 of a different size, as necessary. Therefore, the production cost of foot-sole stimulation boards can be reduced.

Examples of the liquid resin L dispensed from the nozzle 34 include known resins, such as epoxy resin, silicone resin, urethane resin, acrylic resin, and polycarbonate resin. The liquid resin L preferably has a high viscosity and a high thixotropy so that the shape of the resin bodies R can be maintained during the time period from the formation of the resin bodies R on the substrate 10 to the curing treatment. The liquid resin L at 23°C preferably has a viscosity of 10 to 300 Pa·s. and more preferably 100 to 300 Pa·s. The use of a liquid resin with a higher viscosity easily enables the formation of a resin body R higher in shape. The liquid resin L preferably has a thixotropy within the range of 2.0 to 7.0, and more preferably 5.0 to 7.0. The thixotropy as used in this embodiment is a value determined as follows: a sample is placed in a glass bottle and allowed to stand in a water bath at 23°C for about 1 hour, followed by measuring of the viscosity at 2 rpm and 20 rpm with a B-type rotational viscometer, after which the viscosity at 2 rpm is divided by the viscosity at 20 rpm.

Although one embodiment of the present invention is described above, the present invention is not limited to the details of this embodiment, and various modifications may be made without departing from the spirit and principal concepts of the invention. To practice the method for forming resin bodies according to the present invention, not only is the resin-body-forming apparatus 1 described above applicable, but also a wide variety of apparatuses.

### Industrial Applicability

The method for forming resin bodies according to the present invention has applications not only for production of foot-sole stimulation boards, but also for production of a wide variety of items having multiple resin bodies on their surface. Examples of such items include three-dimensional paintings produced by forming multiple protruding resin bodies with different heights on their surface, and LED lighting apparatuses configured such that LED chips mounted on a substrate are each encapsulated in a transparent resin body in a lens-like shape.

### Description of the Reference Numerals

- 1: resin-body-forming apparatus
- 2: table
- 3: dispenser
- 4: main unit
- 10: substrate (object)
- 21: motor
- 31: syringe
- 32: motor
- 33: screw
- 34: nozzle
- 41: control unit
- 411: position controller
- 412: dispense adjuster
- 42: memory unit
- 43: operation-receiving unit
- D: setting data
- L: liquid resin
- P: position
- R: resin body
- S: special region

## Claims

1. A method for forming resin bodies, the method comprising dispensing a liquid resin from a dispenser at multiple positions on an object, wherein the dispensing operation of the dispenser is adjustable depending on the positions.

2. The method for forming resin bodies according to Claim 1, wherein the amount of the liquid resin to be dispensed is adjustable depending on the positions.

3. The method for forming resin bodies according to Claim 1 or 2, wherein the time period during which the liquid resin is dispensed is adjustable depending on the positions.

4. The method for forming resin bodies according to any one of Claims 1 to 3, wherein the relative velocity in the vertical direction of the dispenser with respect to the object while the liquid resin is dispensed is adjustable depending on the positions.

5. The method for forming resin bodies according to any one of Claims 1 to 4, wherein the distance between the object and the dispenser in the vertical direction at the time point at which the liquid resin starts to be dispensed is adjustable depending on the positions.

6. The method for forming resin bodies according to any one of Claims 1 to 5, wherein the liquid resin at 23°C has a viscosity of 100 to 300 Pa·s.

7. The method for forming resin bodies according to any one of Claims 1 to 6, wherein the liquid resin has a thixotropy of 5.0 to 7.0.

8. An article formed by the method for forming resin bodies according to any one of Claims 1 to 7.
